# EUROPÄISCHE PATENTSCHRIFT

(11) **EP 0 489 475 B1**
(45) Veröffentlichungstag und Bekanntmachung des Hinweises auf die Patenterteilung: **27.03.1996**
(21) Anmeldenummer: 91203159.8
(22) Anmeldetag: 03.12.1991
(51) Int. Cl.: G11B 33/02, G11B 33/06

(54) **Diktiergerät, das beim Betrieb in einer Hand gehalten wird**
Dictating machine for hand-held operation
Appareil à dicter, se tenant dans une main lors du fonctionnement

(30) Priorität: 06.12.1990 AT 2473/90
(43) Veröffentlichungstag der Anmeldung: 10.06.1992
(73) Patentinhaber: Philips Electronics N.V., NL-5621 BA Eindhoven (NL)
(72) Erfinder: Ellermeier, Konrad, NL-5656 AA Eindhoven (NL)
(74) Vertreter: Cuppens, Hubertus Martinus Maria

(56) Entgegenhaltungen:
- GB-A- 2 228 820
- US-A- 3 877 074
- US-A- 4 602 358

## Beschreibung

Die Erfindung betrifft ein Diktiergerät, das beim Betrieb in einer Hand gehalten wird, mit einem im wesentlichen länglichen Gehäuse, das sich in seiner Längsrichtung zwischen einem kopfseitigen Bereich und einem fußseitigen Bereich erstreckt und das eine Deckenwand, eine Bodenwand, eine erste Längsseitenwand und eine zweite Längsseitenwand und eine kopfseitige Querseitenwand und eine fußseitige Querseitenwand aufweist, und mit einer an der ersten Längsseitenwand im kopfseitigen Bereich vorgesehenen, mit dem Daumen einer Hand betätigbaren Handhabe zum Ein- und Ausschalten mindestens einer Betriebsfunktion des Diktiergerätes.

Ein solches Diktiergerät ist beispielsweise aus dem US-Patent Nr. 3 877 074 bekannt. Ebenso ist ein solches Diktiergerät aus dem österreichischen Patent Nr. 348 789 bekannt. Jedes dieser beiden bekannten Diktiergeräte, die sehr häufig auch als Taschendiktiergeräte bezeichnet werden, weist ein längliches, genau quaderförmiges Gehäuse auf, das an einer ersten vollkommen gerade verlaufenden Längsseitenwand in seinem kopfseitigen Bereich eine mit dem Daumen einer Hand betätigbare Schiebetaste als Handhabe zum Einschalten von Betriebsarten des Diktiergerätes aufweist. Aufgrund der genau quaderförmigen und daher vollkommen geraden Gehäuseausbildung mit einer vollkommen gerade verlaufenden ersten Längsseitenwand muß der Daumen in einer von der Handfläche relativ weit weggestreckten unbequemen Lage gehalten werden, um das Gerät halten und dabei die Handhabe an der ersten Längsseitenwand mit dem Daumen betätigen zu können, was den Benützer des Gerätes beim Festhalten desselben zwingt, die Hand weiter zu öffnen, als dies für ein sicheres Festhalten des Gerätes günstig ist, und was von dem Benützer des Gerätes bei länger andauernder Benutzung wegen der unnatürlichen Haltung des Daumens als wenig angenehm empfunden wird und zu einem relativ raschen Ermüden der Hand führt, mit der das Gerät beim Betrieb gehalten wird.

Die Erfindung hat sich zur Aufgabe gestellt, die vorstehend angeführten Schwierigkeiten zu vermeiden und ein Diktiergerät gemäß dem eingangs angeführten Absatz so auszubilden, daß dasselbe beim Betrieb, bei dem der Daumen mit der durch ihn betätigbaren Handhabe zusammenwirken muß, bequem und sicher mit der Hand festgehalten werden kann und daß hiebei der Daumen auch beim Betätigen der Handhabe in einer natürlichen und angenehmen Haltung gehalten werden kann, so daß auch bei einem lang andauernden Diktiervorgang praktisch keine Ermüdungserscheinungen in der das Gerät haltenden Hand auftreten. Hiefür ist die Erfindung dadurch gekennzeichnet, daß die erste Längsseitenwand des Gehäuses im kopfseitigen Bereich in Richtung zur zweiten Längsseitenwand hin abgewinkelt ausgebildet ist und zwei über einen rückenartigen Übergangsbereich miteinander verbundene Wandabschnitte aufweist und daß die Längsrichtung des zwischen dem rückenartigen Übergangsbereich und der kopfseitigen Querseitenwand sich erstreckenden abgewinkelten kopfseitigen Wandabschnittes der ersten Längsseitenwand und die Längsrichtung des Gehäuses einen Winkel in einem Winkelbereich von 3^{o} bis 50^{o} miteinander einschließen und daß die mit dem Daumen betätigbare Handhabe an dem abgewinkelten kopfseitigen Wandabschnitt der ersten Längsseitenwand vorgesehen ist. Auf diese Weise ist eine in ergonomischer Hinsicht besonders vorteilhafte Ausbildung eines Diktiergerätes, das beim Betrieb in einer Hand gehalten wird, erhalten, bei dem vorteilhafterweise auch bei einem lang andauernden Diktiervorgang praktisch keine Ermüdungserscheinungen in der das Gerät haltenden Hand auftreten, weil aufgrund der abgewinkelten Ausbildung der ersten Längsseitenwand und des Vorsehens der mit dem Daumen betätigbaren Handhabe an dem abgewinkelten kopfseitigen Wandabschnitt der ersten Längsseitenwand der Daumen beim Betätigen der Handhabe eine natürliche und unverkrampfte Lage einnimmt. Weiters ist dadurch erreicht, daß beim Betätigen der Handhabe mit dem Daumen die das Gerät hiebei zumindest teilweise umfassende Hand nicht unnötig weit geöffnet zu werden braucht, so daß auch beim Betätigen der Handhabe mit dem Daumen stets für ein sicheres Festhalten des Gerätes mit der Hand gesorgt ist.

An dieser Stelle sei erwähnt, daß aus der DE-OS 38 06 896 ein Taschendiktiergerät bekannt ist, das ein in Seitenansicht kopfseitig abgewinkeltes Gehäuse aufweist, dessen beide Längsseitenwände, also auch jene, an der eine mit dem Daumen einer das Diktiergerät haltenden Hand betätigbare Handhabe vorgesehen ist, aber vollkommen gerade verlaufen. Aus dem deutschen Gebrauchsmuster Nr. 86 28 999 ist eine Fernbedienung bekannt, die ebenfalls ein in Seitenansicht kopfseitig abgewinkeltes Gehäuse aufweist, dessen beide Längsseitenwände aber auch vollkommen gerade verlaufen, und bei der an den Längsseitenwänden keine Handhabe vorgesehen ist, sondern nur an der Deckenwand derselben. Aus dem deutschen Gebrauchsmuster Nr. 83 10 908 ist ein sogenanntes Tischterminal als Endgerät von Freisprechanlagen mit einem Gehäuse mit leicht abgewinkelten Längsseitenwänden bekannt, wobei es sich aber um kein Diktiergerät handelt, das beim Betrieb in einer Hand gehalten wird, und wobei an den Längsseitenwänden keine Handhabe vorgesehen ist, sondern nur an der Deckenwand dieses Gerätes. Bei diesen drei bekannten Geräten unterschiedlicher Art treten weder die eingangs erläuterten Schwierigkeiten auf, die bei den aus dem US-Patent Nr. 3 877 074 und dem österreichischen Patent Nr. 348 789 bekannten Diktiergeräten auftreten, noch werden die Vorteile erzielt, die bei einem erfindungsgemäß ausgebildeten Diktiergerät erhalten werden.

Bei einem erfindungsgemäßen Diktiergerät gibt es hinsichtlich des Grades der Abwinkelung der ersten Längsseitenwand des Gerätegehäuses im kopfseitigen Bereich eine Reihe von Möglichkeiten. Als besonders vorteilhaft hat sich erwiesen, wenn die Längsrichtung des zwischen dem rückenartigen Übergangsbereich und der kopfseitigen Querseitenwand sich erstreckenden abgewinkelten kopfseitigen Wandabschnittes der ersten Längsseitenwand und die Längsrichtung des Gehäuses einen Winkel von 20^{o} miteinander einschließen. Dies hat sich hinsichtlich eines besonders angenehmen und bequemen Betätigens der mit dem Daumen betätigbaren Handhabe als vorteilhaft erwiesen.

Weiters hat sich als vorteilhaft erwiesen, wenn zusätzlich die zweite Längsseitenwand des Gehäuses im kopfseitigen Bereich in derselben Richtung wie die erste Längsseitenwand abgewinkelt ausgebildet ist und zwei über einen kehlenartigen Übergangsbereich miteinander verbundene Wandabschnitte aufweist. Auf diese Weise ist für ein besonders sicheres Festhalten des Diktiergerätes mit der Hand gesorgt, weil durch den in dem kehlenartigen Übergangsbereich ruhenden Finger ein Verschieben des Diktiergerätes in der Hand praktisch ausgeschlossen ist; dies auch beim Betätigen der an der ersten Längsseitenwand vorgesehenen Handhabe mit dem Daumen.

Als vorteilhaft hat sich weiters erwiesen, wenn der rückenartige Übergangsbereich der ersten Längsseitenwand und der kehlenartige Übergangsbereich der zweiten Längsseitenwand im wesentlichen auf einer Verbindungslinie liegen, die senkrecht zur Längsrichtung des Gehäuses verläuft. Dies hat sich ebenfalls im Hinblick auf eine möglichst geringe Ermüdung der das Gerät haltenden Hand und auf eine möglichst bequeme Bedienung der mit dem Daumen betätigbaren Handhabe als vorteilhaft erwiesen. Weiters ist dies im Hinblick auf eine in ergonomischer Hinsicht möglichst gut an die Form einer geschlossenen Hand angepaßte Ausbildung vorteilhaft.

Weiters hat sich als vorteilhaft erwiesen, wenn der zwischen dem rückenartigen Übergangsbereich und der kopfseitigen Querseitenwand sich erstreckende abgewinkelte kopfseitige Wandabschnitt der ersten Längsseitenwand und der zwischen dem kehlenartigen Übergangsbereich und der kopfseitigen Querseitenwand sich erstreckende abgewinkelte kopfseitige Wandabschnitt der zweiten Längsseitenwand im wesentlichen parallel zueinander verlaufen. Auch dies ist im Hinblick auf eine in ergonomischer Hinsicht möglichst gut an die Form einer geschlossenen Hand angepaßte Ausbildung und auf ein gutes Festhalten des Diktiergerätes vorteilhaft.

Als vorteilhaft hat sich weiters erwiesen, wenn der Abstand zwischen den beiden abgewinkelten kopfseitigen Wandabschnitten der ersten und zweiten Längsseitenwand gegenüber dem Abstand zwischen den beiden fußseitigen Wandabschnitten der ersten und zweiten Längsseitenwand ausgehend vom kehlenartigen Übergangsbereich der zweiten Längsseitenwand vermindert ist. Auf diese Weise ist ein relativ stark ausgeprägter kehlenartiger Übergangsbereich erhalten, wodurch eine besonders gut an die Handform angepaßte Gehäuseausbildung erreicht ist, die die unterschiedlichen Abstände der Finger zum Daumen berücksichtigt, und wodurch ein besonders sicheres Festhalten des Diktiergerätes erreicht wird.

Als vorteilhaft hat sich auch erwiesen, wenn die Längsrichtung des zwischen dem kehlenartigen Übergangsbereich und der fußseitigen Querseitenwand sich erstreckenden fußseitigen Wandabschnittes der zweiten Längsseitenwand zu der Längsrichtung des Gehäuses im wesentlichen parallel verläuft. Dies ist im Hinblick auf eine in ergonomischer Hinsicht möglichst gut an den Verlauf der Handinnenfläche im Bereich der Übergänge des kleinen Fingers, des Ringfingers und des Mittelfingers in die Handinnenfläche angepaßte Gehäuseausbildung vorteilhaft.

Weiters hat sich als besonders vorteilhaft erwiesen, wenn im kehlenartigen Übergangsbereich der zweiten Längsseitenwand eine weitere Handhabe zum Ein- und Ausschalten mindestens einer weiteren Betriebsfunktion des Diktiergerätes vorgesehen ist. Durch das Vorsehen einer weiteren Handhabe im kehlenartigen Übergangsbereich der zweiten Längsseitenwand ist vorteilhafterweise erreicht, daß der mit dieser weiteren Handhabe zusammenwirkende Finger durch die Kehlenform des Gehäuses in dem Bereich, in dem die weitere Handhabe vorgesehen ist, stets sicher mit der weiteren Handhabe in Wirkverbindung verbleibt, ohne daß die Gefahr des Abgleitens des betreffenden Fingers von dieser weiteren Handhabe besteht.

In diesem Zusammenhang hat sich als besonders vorteilhaft erwiesen, wenn die weitere Handhabe als Drucktaste ausgebildet ist. Durch die Ausbildung der weiteren Handhabe als Drucktaste, die in dem kehlenartigen Übergangsbereich liegt, ist ein besonders einfaches und angenehmes Betätigen dieser weiteren Handhabe erreicht.

Als vorteilhaft hat sich auch noch erwiesen, wenn die erste Längsseitenwand des Gehäuses auch im fußseitigen Bereich in Richtung zur zweiten Längsseitenwand hin abgewinkelt ausgebildet ist und die Längsrichtung des zwischen dem rückenartigen Übergangsbereich und der fußseitigen Querseitenwand sich erstreckenden abgewinkelten fußseitigen Wandabschnittes der ersten Längsseitenwand und die Längsrichtung des Gehäuses einen Winkel in einem Winkelbereich von 2^{o} bis 20^{o} miteinander einschließen. Dies ist im Hinblick auf eine gute Anpassung der Ausbildung des Gehäuses an die Form der Hand im Bereich des Handballens sehr vorteilhaft.

Hiebei hat sich als besonders vorteilhaft erwiesen, wenn die Längsrichtung des zwischen dem rückenartigen Übergangsbereich und der fußseitigen Querseitenwand sich erstreckenden abgewinkelten fußseitigen Wandabschnittes der ersten Längsseitenwand und die Längsrichtung des Gehäuses einen Winkel von 6^{o} miteinander einschließen. Dies hat sich in diesem Zusammenhang als günstigste Ausbildung erwiesen.

Als vorteilhaft hat sich weiters erwiesen, wenn das Gehäuse im Bereich seines bei der fußseitigen Querseitenwand liegenden Endes sich im Bereich seiner Bodenwand zur fußseitigen Querseitenwand hin verjüngend ausgebildet ist. Hiedurch ist eine besonders gute Anpassung des Gehäuses mit seinem Bodenbereich an die Form einer Hand in dem zwischen der Fingerwurzel des kleinen Fingers und dem vom Daumen abgewandten Ende des Handballens liegenden Bereich der Handinnenfläche erreicht.

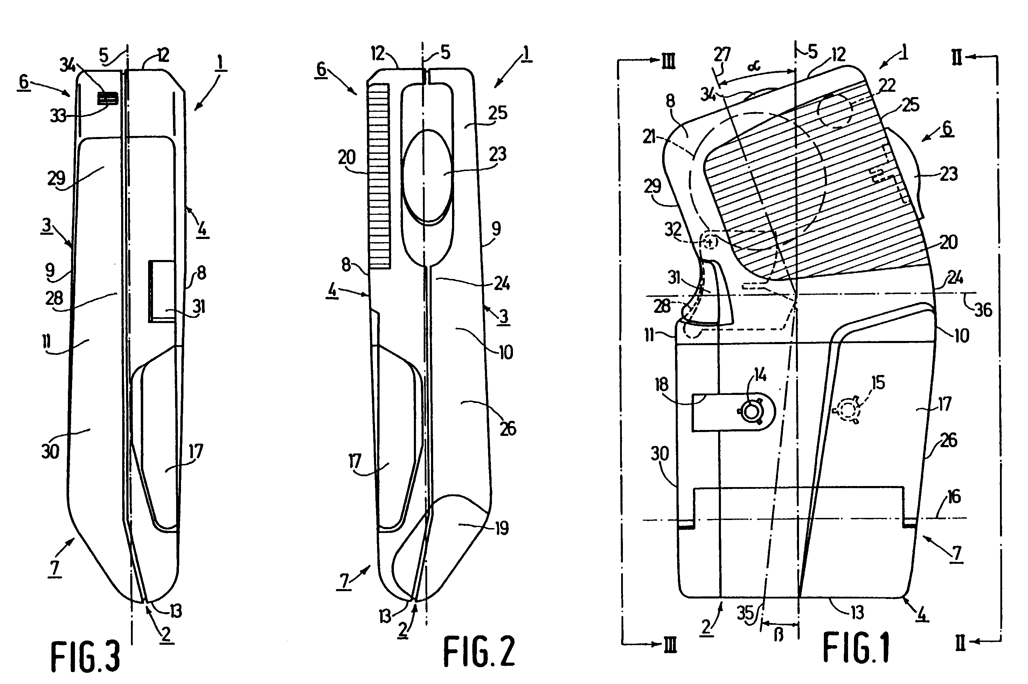

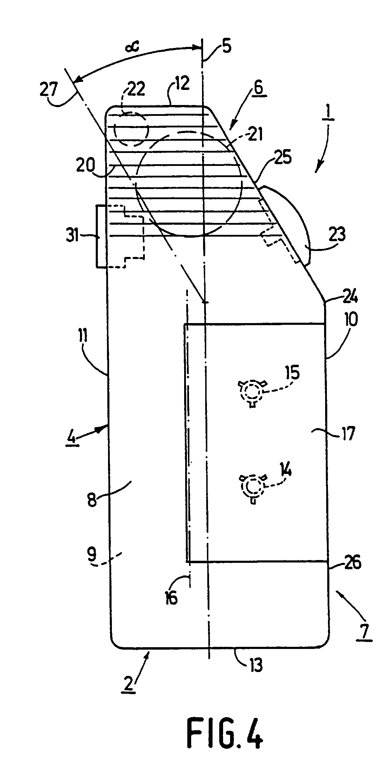

Die Erfindung wird im folgenden anhand von zwei in den Zeichnungen dargestellten Ausführungsbeispielen, auf die die Erfindung jedoch nicht beschränkt sein soll, näher beschrieben. Die Figur 1 zeigt etwa in natürlicher Größe in Draufsicht ein Diktiergerät gemäß einem ersten Ausführungsbeispiel, das beim Betrieb in einer Hand gehalten wird und dessen Gehäuse zwei abgewinkelt bzw. geknickt ausgebildete Längsseitenwände aufweist. Die Figur 2 zeigt in einer Seitenansicht gemäß der Linie II-II in Figur 1 das Diktiergerät gemäß Figur 1. Die Figur 3 zeigt in einer Seitenansicht gemäß der Linie III-III in Figur 1 das Diktiergerät gemäß Figur 1. Die Figur 4 zeigt etwa in natürlicher Größe in Draufsicht ein Diktiergerät gemäß einem zweiten Ausführungsbeispiel, das beim Betrieb in einer Hand gehalten wird und dessen Gehäuse eine abgewinkelt ausgebildete Längsseitenwand aufweist.

Die Figuren 1 bis 3 zeigen ein Diktiergerät 1 gemäß einem ersten Ausführungsbeispiel, das beim Betrieb in einer Hand gehalten wird und das sehr häufig auch als sogenanntes Taschendiktiergerät bezeichnet wird. Das Diktiergerät 1 weist ein im wesentlichen längliches Gehäuse 2 auf, das aus einer bodenseitigen Gehäusewanne 3 und einer deckenseitigen Gehäusewanne 4 besteht. Das Gehäuse erstreckt sich in seiner Längsrichtung 5, die in den Figuren 1 bis 3 mit einer strichpunktierten Linie angegeben ist, zwischen einem kopfseitigen Bereich 6 und einem fußseitigen Bereich 7. Die Längsrichtung 5 des Gehäuses 2 ist im wesentlichen durch die mittlere Längserstreckung des fußseitigen Bereiches 7 des Gehäuses 2 festgelegt. Das Gehäuse 2 weist eine Deckenwand 8, eine Badenwand 9, eine erste Längsseitenwand 10 und eine zweite Längsseitenwand 11 und eine kopfseitige Querseitenwand 12 und eine fußseitige Querseitenwand 13 auf.

Zur Aufnahme einer in das Diktiergerät einsetzbaren, in den Figuren 1 bis 3 nicht dargestellten Magnetbandkassette weist das Diktiergerät 1 einen Aufnahmeraum auf, in den zwei rotierend antreibbare Wickeldorne 14 und 15 hineinragen, die zum Antreiben von zwei in einer Magnetbandkassette nebeneinanderliegenden Wickelkernen dienen. Zum Verschließen dieses Aufnahmeraumes für eine Magnetbandkassette, die beim vorliegenden Diktiergerät mit ihrer Längserstreckung quer zur Längsrichtung 5 des Diktiergerätes 1 in den Aufnahmeraum einsetzbar ist, weist das Diktiergerät 1 einen um eine in Figur 1 schematisch mit einer strichpunktierten Linie angedeutete Schwenkachse 16 verschwenkbaren Deckel 17 auf, in dem ein durchsichtiges Fenster 18 vorgesehen ist, durch das hindurch der Wickeldorn 14 sichtbar ist. Weiters ist am Ende des fußseitigen Bereiches 7 des Gehäuses 2 an der ersten Längsseitenwand 10 ein einrastbarer Verschlußdeckel 19 vorgesehen, mit dem ein Aufnahmeraum für Batterien zur Energieversorgung des Diktiergerätes 1 verschlossen ist. In der Deckenwand 8 ist im kopfseitigen Bereich 6 des Gehäuses 2 ein schematisch angedeuteter, mit Durchbrechungen versehener Wandabschnitt 20 vorgesehen, hinter dem ein in Figur 1 schematisch angedeuteter Lautsprecher 21 und ein schematisch angedeutetes Mikrophon 22 angeordnet sind.

Das Diktiergerät 1 ist mit einer an der ersten Längsseitenwand 10 im kopfseitigen Bereich 6 vorgesehenen, mit dem Daumen einer Hand betätigbaren Handhabe 23 zum Ein- und Ausschalten mindestens einer Betriebsfunktion des Diktiergerätes 1 versehen. Im vorliegenden Fall ist die Handhabe als Schiebetaste ausgebildet, die in Längsrichtung der ersten Längsseitenwand 10 verschiebbar geführt ist und die beispielsweise zwischen vier unterschiedlichen Betriebsstellungen verstellbar ist, wobei mit ihr in jeder Betriebsstellung eine Betriebsfunktion des Diktiergerätes einschaltbar ist. Bei diesen vier Betriebsfunktionen handelt es sich in Aufeinanderfolge um die Betriebsfunktionen "Schneller Vorlauf", "Normaler Vorlauf", "Stop" und "Schneller Rücklauf".

Wie aus Figur 1 ersichtlich ist, ist die erste Längsseitenwand 10 des Gehäuses 2 im kopfseitigen Bereich 6 in Richtung zur zweiten Längsseitenwand 11 hin abgewinkelt ausgebildet. Dabei weist die erste Längsseitenwand 10 zwei über einen rückenartigen, im vorliegenden Fall kreisbogenförmig verlaufenden Übergangsbereich 24 miteinander verbundene Wandabschnitte 25 und 26 auf. Wie weiters aus Figur 1 ersichtlich ist, schließen die Längsrichtung 27 des zwischen dem rückenartigen Übergangsbereich 24 und der kopfseitigen Querseitenwand 12 sich erstreckenden abgewinkelten kopfseitigen Wandabschnittes 25 der ersten Längsseitenwand 10, die in Figur 1 mit einer strichpunktierten Linie angedeutet ist, und die Längsrichtung 5 des Gehäuses 2 einen Winkel α miteineinander ein, der im vorliegenden Fall einen Wert von 20^{o} aufweist. Dabei ist die mit dem Daumen einer Hand betätigbare Handhabe 23 an dem abgewinkelten kopfseitigen Wandabschnitt 25 der ersten Längsseitenwand 10 vorgesehen. Durch diesen abgewinkelten Verlauf der ersten Längsseitenwand 10 und das Vorsehen der Handhabe 23 an dem abgewinkelten kopfseitigen Wandabschnitt 25 der ersten Längsseitenwand 10 ist eine in ergonomischer Hinsicht besonders vorteilhafte Ausbildung eines solchen Diktiergerätes 1 erhalten, bei dem vorteilhafterweise auch bei einem lang andauernden Diktiervorgang praktisch keine Ermüdungserscheinungen in der das Diktiergerät 1 haltenden Hand auftreten, weil der Daumen beim Betätigen der Handhabe 23 stets eine natürliche und unverkrampfte Lage einnehmen kann. Weiters ist hiedurch erreicht, daß beim Betätigen der Handhabe 23 mit dem Daumen die hiebei das Diktiergerät 1 haltende Hand nicht unnötig weit geöffnet zu werden braucht, so daß auch während des Betätigens der Handhabe 23 mit dem Daumen stets für ein sicheres Festhalten des Diktiergerätes 1 mit der Hand gesorgt ist.

Bei dem Diktiergerät 1 gemäß den Figuren 1 bis 3 ist zusätzlich die zweite Längsseitenwand 11 des Gehäuses 2 im kopfseitigen Bereich 6 in derselben Richtung wie die erste Längsseitenwand 10 abgewinkelt ausgebildet. Dabei weist die zweite Längsseitenwand 11 zwei über einen kehlenartigen Übergangsbereich 28 miteinander verbundene Wandabschnitte 29 und 30 auf. Hiedurch ist ein besonders sicheres Festhalten des Diktiergerätes 1 gewährleistet, weil durch den im kehlenartigen Übergangsbereich 28 ruhenden Finger ein Verschieben des Diktiergerätes 1 in der Hand praktisch ausgeschlossen ist.

Der rückenartige Übergangsbereich 24 der ersten Längsseitenwand 10 und der kehlenartige Übergangsbereich 28 der zweiten Längsseitenwand 11 liegen im wesentlichen auf einer Verbindungslinie 36, die in Figur 1 ebenfalls mit einer strichpunktierten Linie dargestellt ist und die senkrecht zur Längsrichtung 5 des Gehäuses 2 verläuft. Durch diese Maßnahme ist eine in ergonomischer Hinsicht möglichst gut an die Form einer geschlossenen Hand angepaßte Ausbildung des Diktiergerätes 1 erreicht. Weiters hat sich diese Maßnahme auch im Hinblick auf eine möglichst geringe Ermüdung der das Diktiergerät 1 haltenden Hand und auf eine möglichst bequeme Bedienung der mit dem Daumen betätigbaren Handhabe 23 als vorteilhaft erwiesen.

Der zwischen dem rückenartigen Übergangsbereich 24 und der kopfseitigen Querseitenwand 12 sich erstreckende abgewinkelte kopfseitige Wandabschnitt 25 der ersten Längsseitenwand 10 und der zwischen dem kehlenartigen Übergangsbereich 28 und der kopfseitigen Querseitenwand 12 sich erstreckende abgewinkelte kopfseitige Wandabschnitt 29 der zweiten Längsseitenwand 11 verlaufen bei dem Diktiergerät 1 gemäß den Figuren 1 bis 3 parallel zueinander. Auch dies ist im Hinblick auf eine in ergonomischer Hinsicht möglichst gut an die Form einer geschlossenen Hand angepaßte Ausbildung und auf ein gutes Festhalten des Diktiergerätes 1 vorteilhaft.

Wie aus Figur 1 ersichtlich ist, ist der Abstand, und zwar der Abstand senkrecht zur Längsrichtung 27, zwischen den beiden abgewinkelten kopfseitigen Wandabschnitten 25 und 29 der ersten und zweiten Längsseitenwand 10 und 11 gegenüber dem Abstand, und zwar dem Abstand senkrecht zur Längsrichtung 5 des Gehäuses 2, zwischen den beiden fußseitigen Wandabschnitten 26 und 30 der ersten und zweiten Längsseitenwand 10 und 11 ausgehend vom kehlenartigen Übergangsbereich 28 der zweiten Längsseitenwand 11 vermindert. Hiedurch ist ein relativ stark ausgeprägter kehlenartiger Übergangsbereich 28 erhalten, was im Hinblick auf eine besonders gut an die Handform angepaßte Gehäuseausbildung vorteilhaft ist, da durch eine solche Gehäuseausbildung die unterschiedlich großen Abstände der Finger zum Daumen berücksichtigt sind. Durch den stark ausgeprägten kehlenartigen Übergangsbereich 28 ist weiters ein besonders sicheres Festhalten des Diktiergerätes 1 gewährleistet.

Weiters ist aus Figur 1 ersichtlich, daß die Längsrichtung des zwischen dem kehlenartigen Übergangsbereich 28 und der fußseitigen Querseitenwand 13 sich erstreckenden fußseitigen Wandabschnittes 30 der zweiten Längsseitenwand 11 zu der Längsrichtung 5 des Gehäuses 2 parallel verläuft. Ein solcher Verlauf des fußseitigen Wandabschnittes 30 der zweiten Längsseitenwand 11 ist deshalb günstig, weil hiedurch eine in ergonomischer Hinsicht möglichst gut an den Verlauf der Handinnenfläche im Bereich der Übergänge des kleinen Fingers, des Ringfingers und des Mittel fingers in die Handinnenfläche angepaßte Gehäuseausbildung erreicht ist.

Im kehlenartigen Übergangsbereich 28 der zweiten Längsseitenwand 11 ist beim Diktiergerät 1 eine weitere Handhabe 31 zum Ein- und Ausschalten einer weiteren Betriebsfunktion des Diktiergerätes 1, nämlich der Betriebsfunktion "Aufnahme" vorgesehen. Die weitere Handhabe 31 ist dabei vorteilhafterweise als Drucktaste ausgebildet, die hiebei um eine Schwenkachse 32 im Geräteinneren schwenkbar gelagert ist und mittels einer an ihr angreifenden, nicht dargestellten Rückstellfeder in der in Figur 1 gezeigten Ruhelage gehalten ist: Durch das Vorsehen der weiteren Handhabe 31 in dem kehlenartigen Übergangsbereich 28 ist auf besonders einfache Weise sichergestellt, daß der mit dieser weiteren Handhabe 31 zusammenwirkende Finger stets sicher mit derselben in Wirkverbindung verbleibt, ohne daß die Gefahr des Abgleitens des betreffenden Fingers von dieser weiteren Handhabe 31 besteht. Dadurch, daß die weitere Handhabe 31 als Drucktaste ausgebildet ist, ist ein besonders einfaches und angenehmes Betätigen dieser weiteren Handhabe erreicht.

Durch einen in der kopfseitigen Querseitenwand 12 vorgesehenen, in Figur 3 nicht mit separaten Linien dargestellten Durchbruch 33 ragt aus dem Geräteinneren ein Teil eines Rändelrades 34 heraus, mit dem ein Potentiometer zur Einstellung der Wiedergabelautstärke einstellbar ist. Das Verdrehen des Rändelrades 34 kann dabei in einfacher Weise mit dem Zeigefinger der das Diktiergerät 1 haltenden Hand erfolgen, wobei beim Verdrehen des Rändelrades 34 mit dem Zeigefinger vorteilhafterweise kein Umgreifen bzw. Versetzen der anderen Finger erforderlich ist.

Beim vorliegenden Diktiergerät 1 ist die erste Längsseitenwand 10 des Gehäuses 2 auch im fußseitigen Bereich 7 in Richtung zur zweiten Längsseitenwand 11 hin abgewinkelt ausgebildet. Dabei schließen die Längsrichtung 35 des zwischen dem rückenartigen Übergangsbereich 24 und der fußseitigen Querseitenwand 13 sich erstreckenden abgewinkelten fußseitigen Wandabschnittes 26 der ersten Längsseitenwand 10, die in Figur 1 mit einer strichpunktierten Linie angedeutet ist, und die Längsrichtung 5 des Gehäuses 2 einen Winkel β ein, der im vorliegenden Fall einen Wert von 6^{o} aufweist. Dies ist im Hinblick auf eine gute Anpassung der Ausbildung des Gehäuses 2 des Diktiergerätes an die Form der Hand im Bereich des Handballens besonders vorteilhaft.

Wie aus den Figuren 2 und 3 ersichtlich ist, ist das Gehäuse 2 im Bereich seines bei der fußseitigen Querseitenwand 13 liegenden Endes sich im Bereich seiner Bodenwand 9 zur fußseitigen Querseitenwand 13 hin verjüngend ausgebildet. Hiedurch ist eine besonders gute Anpassung des Gehäuses 2 des Diktiergerätes 1 mit seinem Bodenbereich an die Form einer Hand in dem zwischen der Fingerwurzel des kleinen Fingers und dem vom Daumen abgewandten Ende des Handballens liegenden Bereich der Handinnenfläche erreicht.

Die Figur 4 zeigt ein Diktiergerät 1 gemäß einem zweiten Ausführungsbeispiel der Erfindung. Auch in dieses Diktiergerät 1 ist eine Kassette mit einem Magnetband als Speichermedium einsetzbar. Bei dem Diktiergerät 1 gemäß Figur 4 ist die Kassette mit ihrer Längsrichtung parallel zur Längsrichtung 5 des Diktiergerätes 1 in einen Aufnahmeraum desselben einsetzbar. Dieser Aufnahmeraum, in den auch zwei rotierend antreibbare Winkeldorne 14 und 15 zum Antreiben von zwei in einer Kassette untergebrachten Wickelkernen hineinragen, ist mit einem um eine schematisch mit einer strichpunktierten Linie angedeutete Schwenkachse 16 verschwenkbaren Deckel 17 verschließbar.

Das Diktiergerät 1 gemäß Figur 4 weist ein längliches Gehäuse 2 auf, das sich in seiner Längsrichtung 5 zwischen einem kopfseitigen Bereich 6 und einem fußseitigen Bereich 7 erstreckt. Das Gehäuse 2 besteht aus einer Deckenwand 8, einer Bodenwand 9, einer ersten Längsseitenwand 10 und einer zweiten Längsseitenwand 11 und einer kopfseitigen Querseitenwand 12 und einer fußseitigen Querseitenwand 13, Die Deckenwand 8 weist im kopfseitigen Bereich 6 einen schematisch angedeuteten, mit Durchbrüchen versehenen Bereich 20 auf, hinter dem ein schematisch angedeuteter Lautsprecher 21 und ein schematisch angedeutetes Mikrophon 22 liegen. Im Bereich der zweiten Längsseitenwand 11 ist eine als Drucktaste ausgebildete Handhabe 31 zum Einschalten der Aufnahmefunktion des Diktiergerätes 1 vorgesehen. An der ersten Längsseitenwand 10 ist eine auch in diesem Fall als Schiebetaste ausgebildete Handhabe 23 vorgesehen, mit der dieselben Betriebsfunktionen im vorliegenden Diktiergerät 1 einschaltbar sind, wie mit der entsprechenden Handhabe beim Diktiergerät gemäß den Figuren 1 bis 3.

Auch bei dem Diktiergerät 1 gemäß Figur 4 ist die erste Längsseitenwand 10 des Gehäuses 2 im kopfseitigen Bereich 6 in Richtung zur zweiten Längsseitenwand 11 hin abgewinkelt ausgebildet. Die erste Längsseitenwand 10 weist zwei über einen im vorliegenden Fall nur sehr kleinen rückenartigen Übergangsbereich 24 miteinander verbundene Wandabschnitte 25 und 26 auf. Dabei schließen die Längsrichtung 27 des zwischen dem rückenartigen Übergangsbereich 24 und der kopfseitigen Querseitenwand 12 sich erstreckenden abgewinkelten kopfseitigen Wandabschnittes 25 der ersten Längsseitenwand 10 und die Längsrichtung 5 des Gehäuses 2 einen Winkel α miteinander ein, der bei diesem Gerät einen Wert von 30^{o} aufweist. An dem abgewinkelten kopfseitigen Wandabschnitt 25 der ersten Längsseitenwand 10 ist die mit dem Daumen einer Hand betätigbare, als Schiebetaste ausgebildete Handhabe 23 vorgesehen. Auch in diesem Fall ist eine in ergonomischer Hinsicht vorteilhafte Ausbildung des Diktiergerätes 1, das beim Betrieb in einer Hand gehalten wird, erhalten. Auch bei diesem Diktiergerät 1 treten vorteilhafterweise sogar bei einem lang andauernden Diktiervorgang praktisch keine Ermüdungserscheinungen in der das Diktiergerät haltenden Hand auf, weil der die Handhabe 23 betätigende Daumen in einer angenehmen und natürlichen Lage auch während des Betätigens der Handhabe 23 gehalten werden kann. Da der Daumen auch beim Betätigen der Handhabe 23 eine natürliche und unverkrampfte Lage einnimmt, braucht die Hand niemals unnötig weit geöffnet werden, so daß stets für ein sicheres Festhalten des Diktiergerätes 1 während des Betriebes gesorgt ist.

Im Rahmen der Erfindung sind eine Reihe von Ausführungsformen möglich, da beispielsweise der Grad der Abwinkelung der ersten Längsseitenwand des Gerätegehäuses im kopfseitigen Bereich entsprechend unterschiedlichen Bedürfnissen und Wünschen gewählt werden kann. Bei den Diktiergeräten gemäß den beiden vorstehend beschriebenen Ausführungsbeispielen ist die an dem abgewinkelten kopfseitigen Wandabschnitt vorgesehene Handhabe je als Schiebetaste ausgebildet, die in Längsrichtung dieses Wandabschnittes verschiebbar ist. Diese Handhabe kann aber auch als Schiebetaste, die quer zur Längsrichtung dieses Wandabschnittes verschiebbar ist, oder auch als Drucktaste, als Wipptaste oder als verdrehbares Schaltrad ausgebildet sein. Bei den Diktiergeräten gemäß den beiden vorstehend beschriebenen Ausführungsbeispielen handelt es sich um Geräte, in die Magnetbandkassetten einsetzbar sind, die somit als Speichermedium ein Magnetband verwenden. Die erfindungsgemäßen Maßnahmen können aber auch bei anderen Diktiergeräten, die beim Betrieb in einer Hand gehalten werden, zum Einsatz kommen, nämlich etwa bei Diktiergeräten, in die als Speichermedien optisch abtastbare Aufzeichnungsträger einsetzbar sind, oder bei Diktiergeräten, die als Speichermedien Festwertspeicher, beispielsweise Halbleiterspeicher verwenden.

## Patentansprüche

1. Diktiergerät (1), das beim Betrieb in einer Hand gehalten wird, mit einem im wesentlichen länglichen Gehäuse (2), das sich in seiner Längsrichtung (5) zwischen einem kopfseitigen Bereich (6) und einem fußseitigen Bereich (7) erstreckt und das eine Deckenwand (8), eine Bodenwand (9), eine erste Längsseitenwand (10) und eine zweite Längsseitenwand (11) und eine kopfseitige Querseitenwand (12) und eine fußseitige Querseitenwand (13) aufweist, und mit einer an der ersten Längsseitenwand (10) im kopfseitigen Bereich (6) vorgesehenen, mit dem Daumen einer Hand betätigbaren Handhabe (23) zum Ein- und Ausschalten mindestens einer Betriebsfunktion des Diktiergerätes (1), dadurch gekennzeichnet, daß die erste Längsseitenwand (10) des Gehäuses (2) im kopfseitigen Bereich (6) in Richtung zur zweiten Längsseitenwand (11) hin abgewinkelt ausgebildet ist und zwei über einen rückenartigen Übergangsbereich (24) miteinander verbundene Wandabschnitte (25,26) aufweist und daß die Längsrichtung (27) des zwischen dem rückenartigen Übergangsbereich (24) und der kopfseitigen Querseitenwand (12) sich erstreckenden abgewinkelten kopfseitigen Wandabschnittes (25) der ersten Längsseitenwand (10) und die Längsrichtung (5) des Gehäuses (2) einen Winkel (α) in einem Winkelbereich von 3° bis 50° miteinander einschließen und daß die mit dem Daumen betätigbare Handhabe (23) an dem abgewinkelten kopfseitigen Wandabschnitt (25) der ersten Längsseitenwand (10) vorgesehen ist.

2. Diktiergerät nach Anspruch 1, dadurch gekennzeichnet, daß die Längsrichtung des zwischen dem rückenartigen Übergangsbereich und der kopfseitigen Querseitenwand sich erstreckenden abgewinkelten kopfseitigen Wandabschnittes der ersten Längsseitenwand und die Längsrichtung des Gehäuses einen Winkel von 20° miteinander einschließen.

3. Diktiergerät nach Anspruch 1 oder 2, dadurch gekennzeichnet, daß zusätzlich die zweite Längsseitenwand des Gehäuses im kopfseitigen Bereich in derselben Richtung wie die erste Längsseitenwand abgewinkelt ausgebildet ist und zwei über einen kehlenartigen Übergangsbereich miteinander verbundene Wandabschnitte aufweist.

4. Diktiergerät nach Anspruch 3, dadurch gekennzeichnet, daß der rückenartige Übergangsbereich der ersten Längsseitenwand und der kehlenartige Übergangsbereich der zweiten Längsim wesentlichen auf einer Verbindungslinie liegen, die senkrecht zur Längsrichtung des Gehäuses verläuft.

5. Diktiergerät nach Anspruch 3 oder 4, dadurch gekennzeichnet, daß der zwischen dem rückenartigen Übergangsbereich und der kopfseitigen Querseitenwand sich erstreckende abgewinkelte kopfseitige Wandabschnitt der ersten Längsseitenwand und der zwischen dem kehlenartigen Übergangsbereich und der kopfseitigen Querseitenwand sich erstreckende abgewinkelte kopfseitige Wandabschnitt der zweiten Längsseitenwand im wesentlichen parallel zueinander verlaufen.

6. Diktiergerät nach Anspruch 5, dadurch gekennzeichnet, daß der Abstand zwischen den beiden abgewinkelten kopfseitigen Wandabschnitten der ersten und zweiten Längsseitenwand gegenüber dem Abstand zwischen den beiden fußseitigen Wandabschnitten der ersten und zweiten Längsseitenwand ausgehend vom kehlenartigen Übergangsbereich der zweiten Längsseitenwand vermindert ist.

7. Diktiergerät nach einem der Ansprüche 3 bis 6, dadurch gekennzeichnet, daß die Längsrichtung des zwischen dem kehlenartigen Übergangsbereich und der fußseitigen Querseitenwand sich erstreckenden fußseitigen Wandabschnittes der zweiten Längsseitenwand zu der Längsrichtung des Gehäuses im wesentlichen parallel verläuft.

8. Diktiergerät nach einem der Ansprüche 3 bis 7, dadurch gekennzeichnet, daß im kehlenartigen Übergangsbereich der zweiten Längsseitenwand eine weitere Handhabe zum Ein- und Ausschalten mindestens einer weiteren Betriebsfunktion des Diktiergerätes vorgesehen ist.

9. Diktiergerät nach Anspruch 8, dadurch gekennzeichnet, daß die weitere Handhabe als Drucktaste ausgebildet ist.

10. Diktiergerät nach einem der vorhergehenden Ansprüche, dadurch gekennzeichnet, daß die erste Längsseitenwand des Gehäuses auch im fußseitigen Bereich in Richtung zur zweiten Längsseitenwand hin abgewinkelt ausgebildet ist und daß die Längsrichtung des zwischen dem rückenartigen Übergangsbereich und der fußseitigen Querseitenwand sich erstreckenden abgewinkelten fußseitigen Wandabschnittes der ersten Längsseitenwand und die Längsrichtung des Gehäuses einen Winkel in einem Winkelbereich von 2^{o} bis 20^{o} miteinander einschließen.

11. Diktiergerät nach Anspruch 10, dadurch gekennzeichnet, daß die Längsrichtung des zwischen dem rückenartigen Übergangsbereich und der fußseitigen Querseitenwand sich erstreckenden abgewinkelten fußseitigen Wandabschnittes der ersten Längsseitenwand und die Längsrichtung des Gehäuses einen Winkel von 6^{o} miteinander einschließen.

12. Diktiergerät nach einem der vorhergehenden Ansprüche, dadurch gekennzeichnet, daß das Gehäuse im Bereich seines bei der fußseitigen Querseitenwand liegenden Endes sich im Bereich seiner Bodenwand zur fußseitigen Querseitenwand hin verjüngend ausgebildet ist.

## Claims

1. A dictation machine (1) which is hand-held in operation, the machine comprising a substantially elongate housing (2) which extends in its longitudinal direction (5) between an upper part (6) and a lower part (7) and comprises a cover wall (8), a base wall (9), a first longitudinal side wall (10), a second longitudinal side wall (11), an upper transverse side wall (12) and a lower transverse side wall (13), and comprising a grip (23) which is arranged at the first longitudinal side wall (10) in the upper part (6) and which can be actuated by the thumb of a hand to switch on and switch off at least one operating function of the dictation machine (1), characterised in that the first longitudinal side wall (10) of the housing (2) in the upper part (6) is inclined towards the second longitudinal side wall (11) and comprises two wall portions (25, 26) interconnected by a ridge-like transitional portion (24), and the longitudinal direction (27) of the inclined upper wall portion (25) of the first longitudinal side wall (10), which wall portion extends between the ridge-like transitional portion (24) and the upper transverse wall portion (12), and the longitudinal direction (5) of the housing (2) extend at an angle (α) within a range of 3° to 50° relative to one another, and the grip (23) which can be actuated by the thumb is arranged at the inclined upper wall portion (25) of the first longitudinal side wall (10).

2. A dictation machine as claimed in Claim 1, characterised in that the longitudinal direction of the inclined upper wall portion of the first longitudinal side wall, which wall portion extends between the ridge-like transitional portion and the upper transverse side wall, and the longitudinal direction of the housing extend at an angle of 20° relative to one another.

3. A dictation machine as claimed in Claim 1 or 2, characterised in that, in addition, the second longitudinal side wall of the housing at the upper part is inclined in the same direction as the first longitudinal side wall and comprises two wall portions interconnected by a throat-like transitional portion.

4. A dictation machine as claimed in Claim 3, characterised in that the ridge-like transitional portion of the first longitudinal side wall and the throat-like transitional portion of the second longitudinal side wall are disposed substantially on a connecting line which extends perpendicularly to the longitudinal direction of the housing.

5. A dictation machine as claimed in Claim 3 or 4, characterised in that the inclined upper wall portion of the first longitudinal side wall, which wall portion extends between the ridge-like transitional portion and the upper transverse wall portion, and the inclined upper wall portion of the second longitudinal side wall, which wall portion extends between the throat-like transitional portion and the upper transverse side wall, extend substantially parallel to one another.

6. A dictation machine as claimed in Claim 5, characterised in that the distance between the two inclined upper wall portions of the first and the second longitudinal side wall is reduced relative to the distance between the two lower wall portions of the first and the second longitudinal side wall, starting from the throat-like transitional portion of the second longitudinal side wall.

7. A dictation machine as claimed in any one of the Claims 3 to 6, characterised in that the longitudinal direction of the lower wall portion of the second longitudinal side wall, which wall portion extends between the throat-like transitional portion and the lower transverse side wall, extends substantially parallel to the longitudinal direction of the housing.

8. A dictation machine as claimed in any one of the Claims 3 to 7, characterised in that a further grip for switching on and switching off at least one further operating function of the dictation machine is arranged in the throat-like transitional portion of the second longitudinal side wall.

9. A dictation machine as claimed in Claim 8, characterised in that the further grip is constructed as a push-button.

10. A dictation machine as claimed in any one of the preceding Claims, characterised in that also in the lower part the first longitudinal side wall of the housing is inclined towards the second longitudinal side wall, and the longitudinal direction of the inclined lower wall portion of the first longitudinal side wall, which wall portion extends between the ridge-like transitional portion and the lower transverse side wall, and the longitudinal direction of the housing extend at an angle within a range of 2° to 20° relative to one another.

11. A dictation machine as claimed in Claim 10, characterised in that the longitudinal direction of the inclined lower wall portion of the first longitudinal side wall, which wall portion extends between the ridge-like transitional portion and the lower transverse side wall, and the longitudinal direction of the housing extend at an angle of 6° relative to one another.

12. A dictation machine as claimed in any one of the preceding Claims, characterised in that at the location of its end which is situated near the lower transverse side wall the housing, at the location of its base wall, tapers towards the lower transverse side wall.

## Revendications

1. Appareil à dicter (1), se tenant dans un main lors du fonctionnement, comprenant un boîtier (2) de forme sensiblement oblongue, qui s'étend dans sa direction longitudinale (5) entre une zone de tête (6) et une zone de base (7) et qui comporte une paroi supérieure (8), une paroi inférieure (9), une première paroi latérale longitudinale (10) et une deuxième paroi latérale longitudinale (11) ainsi qu'une paroi latérale transversale (12) dans la zone de tête et une paroi latérale transversale (13) dans la zone de base, et comprenant une manette (23), pour enclencher et déclencher au moins une fonction de l'appareil à dicter (1), actionnable du pouce d'une main, prévue au niveau de la première paroi latérale longitudinale (10) dans la zone de tête (6), caractérisé en ce que la première paroi latérale longitudinale (10) du boîtier (2), dans la zone de tête (6) est conçue inclinée en direction de la deuxième paroi latérale longitudinale (11) et comprend deux sections de paroi (25, 26) unies l'une à l'autre par une zone de transition arquée en relief (24) et que la direction longitudinale (27) de la section de paroi (25) inclinée de la première paroi latérale longitudinale (10), s'étendant dans la zone de tête entre la zone de transition arquée en relief (24) et la paroi latérale transversale (12) de la zone de tête et la direction longitudinale (5) du boîtier (2) forment l'une avec l'autre un angle α de l'ordre de 3° à 50° et que la manette (23) actionnable du pouce est prévue sur la section de paroi (25) inclinée, de la première paroi latérale longitudinale (10), dans la zone de tête.

2. Appareil à dicter suivant la revendication 1, caractérisé en ce que la direction longitudinale de la section de paroi inclinée, de la première paroi latérale longitudinale, dans la zone de tête, s'étendant entre la zone de transition arquée en relief et la paroi latérale transversale dans la zone de tête et la direction du boîtier forment l'une avec l'autre un angle de 20°.

3. Appareil à dicter suivant la revendication 1 ou 2, caractérisé en ce que la deuxième paroi latérale longitudinale du boîtier est également conçue inclinée dans la zone de tête dans la même direction que la première paroi latérale longitudinale et comprend deux sections de paroi unies l'une à l'autre par une zone de transition arquée en creux.

4. Appareil à dicter suivant la revendication 3, caractérisé en ce que la zone de transition arquée en relief de la première paroi latérale longitudinale et la zone de transition arquée en creux de la deuxième paroi latérale longitudinale se trouvent en substance sur une ligne de jonction qui s'étend perpendiculairement à la direction longitudinale du boîtier.

5. Appareil à dicter suivant la revendication 3 ou 4, caractérisé en ce que la section de paroi inclinée, dans la zone de tête, de la première paroi latérale longitudinale, s'étendant entre la zone de transition arquée en relief et la paroi latérale transversale dans la zone de tête et la section de paroi inclinée, de la deuxième paroi latérale longitudinale, dans la zone de tête, s'étendant entre la zone de transition arquée en creux et la paroi latérale transversale de la zone de tête s'étendent globalement parallèlement l'une à l'autre.

6. Appareil à dicter suivant la revendication 5, caractérisé en ce que la distance entre les deux sections de paroi inclinées, dans la zone de tête, des première et deuxième parois latérales longitudinales, est réduite par rapport à la distance entre les deux sections de paroi, des première et deuxième parois latérales longitudinales, dans la zone de base à partir de la zone de transition arquée en creux de la deuxième paroi longitudinale.

7. Appareil à dicter suivant l'une quelconque des revendications 3 à 6, caractérisé en ce que la direction longitudinale de la section de paroi, de la deuxième paroi latérale longitudinale, dans la zone de base, s'étendant entre la zone de transition arquée en creux et la paroi latérale transversale dans la zone de base s'étend globalement parallèlement à la direction longitudinale du boîtier.

8. Appareil à dicter suivant l'une quelconque des revendications 3 à 7, caractérisé en ce que dans la zone de transition arquée en creux de la deuxième paroi latérale longitudinale est prévue une autre manette pour enclencher et déclencher au moins une fonction supplémentaire de l'appareil à dicter.

9. Appareil à dicter suivant la revendication 8, caractérisé en ce que la manette supplémentaire est conçue comme un bouton-poussoir.

10. Appareil à dicter suivant l'une quelconque des revendications précédentes, caractérisé en ce que la première paroi latérale longitudinale du boîtier est conçue inclinée également dans la zone de base en direction de la deuxième paroi latérale longitudinale et que la direction longitudinale de la section de paroi inclinée, de la première paroi latérale longitudinale, dans la zone de base s'étendant entre la zone de transition arquée en relief et la paroi latérale transversale dans la zone de base et la direction longitudinale du boîtier forment l'une avec l'autre un angle de l'ordre de 2° à 20°.

11. Appareil à dicter suivant la revendication 10, caractérisé en ce que la direction longitudinale de la section de paroi inclinée, de la première paroi latérale longitudinale, dans la zone de base, s'étendant entre la zone de transition arquée en relief et la paroi latérale transversale dans la zone de base et la direction longitudinale du boîtier forment l'une avec l'autre un angle de 6°.

12. Appareil à dicter suivant l'une quelconque des revendications précédentes, caractérisé en ce que le boîtier dans la zone de son extrémité se trouvant près de la paroi latérale transversale dans la zone de base dans la zone de sa paroi inférieure est conçu d'une manière allant en se rétrécissant vers la paroi latérale transversale dans la zone de base.
